# EUROPÄISCHE PATENTSCHRIFT

(11) **EP 1 434 910 B1**
(45) Veröffentlichungstag und Bekanntmachung des Hinweises auf die Patenterteilung: **23.01.2008**
(21) Anmeldenummer: 02758369.9
(22) Anmeldetag: 19.07.2002
(51) Int. Cl.: D06F 39/00, A47L 15/42

(54) **PROGRAMMGESTEUERTES HAUSHALTGERÄT MIT EINER ANZEIGEEINRICHTUNG**
PROGRAMME-CONTROLLED DOMESTIC APPLIANCE COMPRISING A DISPLAY DEVICE
APPAREIL ELECTROMENAGER COMMANDE PAR UN PROGRAMME ET DOTE D'UN DISPOSITIF D'AFFICHAGE

(30) Priorität: 01.10.2001 DE 10148453
(43) Veröffentlichungstag der Anmeldung: 07.07.2004
(73) Patentinhaber: BSH Bosch und Siemens Hausgeräte GmbH, 81739 München (DE)
(72) Erfinder: BERGEMANN, Heinz-Jürgen, 81543 München (DE); CZYZEWSKI, Gundula, 13125 Berlin (DE); GÖTZ, Konrad, 93309 Kelheim (DE); JÄHNERT, Detlef, 81541 München (DE); REINKER, Bernward, 93128 Regenstauf (DE); SALEIN, Matthias, 13467 Berlin (DE); SCHULZE, Ingo, 16341 Zepernick (DE); SECHELMANN, Eric, 14656 Brieselang (DE)
(86) Internationale Anmeldenummer: PCT/EP2002/008088
(87) Internationale Veröffentlichungsnummer: WO 2003/029549

(56) Entgegenhaltungen:
- DE-A- 19 810 222
- DE-A- 19 834 230
- US-A- 4 763 493
- US-A- 4 977 394
- US-A- 5 038 807

## Beschreibung

Die Erfindung betrifft ein programmgesteuertes Haushaltgerät mit einer Anzeigeeinrichtung für akustische oder optische Zeichen und mit einem Speicherbereich der Programmsteuerungseinrichtung, der zum Speichern von eingestellten Programmparametern und zum Abspeichern von Mess- und Betriebswerten der am ablaufenden Arbeitsprozess beteiligten Aktoren und Sensoren eingerichtet ist.

Ein derartiges Haushaltgerät wird anhand einer Waschmaschine in der DE 198 34 230 A1 beschrieben. Wünschenswert wäre an einem solchen Haushaltgerät, wenn der Benutzer Informationen darüber erhalten könnte, in welcher Weise das zuvor von ihm eingestellte und mit Ingredientien versehene Arbeitsprogramm tatsächlich abgelaufen ist. Beispielsweise kann der Benutzer einer Waschmaschine zwar das erreichte Wasch- und Schleuderergebnis an seiner Wäsche begutachten. Sofern er aber mit dem Ergebnis in irgend einer Weise nicht zufrieden ist, weiß er in aller Regel nicht, aus welchem Grunde das Wasch- oder Schleuderergebnis nicht zu seiner Zufriedenheit ausgefallen ist. Oftmals wird ein dieser Art unzufreidener Benutzer den Kundendienst in Anspruch nehmen, obwohl er bei Kenntnis der tatsächlich abgelaufenen Umstände des zu beanstandenden Arbeitsprozesses möglicherweise durch eine geänderte Verhaltensweise bei der Eingabe von Parametern für zukünftige Arbeitsprozesse die eigene Zufriedenheit selbst herbeiführen könnte.

Aus dem US-Patent 4,977,394 geht ein Diagnosesystem für ein automatisch arbeitendes Hausgerät hervor. In diesem System ist vorgesehen, dass ein Benutzer über ein Anzeigemittel einen Warnhinweis erhält, gemäß welchem er fachkundiges Wartungspersonal zum Hausgerät rufen soll. Für solches Wartungspersonal sind spezielle diagnostische Routinen in dem System sowie spezielle Anzeigen vorgesehen.

Aus der DE 198 10 222 A1 geht ein Verfahren zum Betreiben eines Hausgerätes mit einer Programmeingabevorrichtung und eine Mikrocomputer-Steuerung hervor. Bei der Programmeingabevorrichtung sind Betriebsprogramme und gegebenenfalls Zusatzfunktionen wählbar, und solche Betriebsprogramme und Zusatzfunktionen werden mit der Mikrocomputer-Steuerung gesteuert. Um die tatsächlichen Betriebsdaten für eine spätere Auswertung oder Änderung künftiger Programmabläufe zur Verfügung zu haben, werden die relevanten Betriebsparameter während der gesamten Maschinen-Lebensdauer oder in definierten Abschnitten davon einem nicht flüchtigen Speicher der Mikrocomputer-Steuerung zugeführt und dort für künftige Programmabläufe oder interne und externe Abfragen oder Auswertungen gespeichert.

Der Erfindung liegt daher die Aufgabe zugrunde, dem Kunden eines eingangs genannten Haushaltgerätes die Möglichkeit zu eröffnen, Einzelheiten über das jeweils zuletzt abgelaufene Arbeitsprogramm zu erfahren.

Erfindungsgemäß wird diese Aufgabe dadurch gelöst, dass die Anzeigeeinrichtung ein Anzeigeelement enthält, das nach Ablauf des Arbeitsprozesses eingeschaltet ist und einen Hinweis enthält auf die Möglichkeit der Informationsabgabe über vor und während des zuletzt abgelaufenen Arbeitsprozesses gespeicherte Mess- und Betriebswerte. Durch diese Möglichkeit kann sich der Benutzer eines Haushaltgerätes ohne weiteres Aufklärung darüber verschaffen, ob der vorher gewählte Arbeitsprozess auch tatsächlich so abgelaufen ist, wie er sich diesen Prozess anhand der von ihm getroffenen Einstellungen vorgestellt hatte. Am Ende eines abgelaufenen Arbeitsprozesses kann er sich bei Integra-tion des Erfindungsgegenstandes im Haushaltgerät nämlich entsprechende Informationen anzeigen lassen. Bei einem vorhanden Sprachmodul können diese Informationen beispielsweise akustisch ausgegeben werden. Bei Vorhandensein eines Anzeigedisplays sind aber solche Informationen auch optisch anzeigbar.

Wenn nämlich die Anzeigeeinrichtung ein wenigstens einzeiliges Anzeigedisplay enthält und der Hinweis eine Abbildung eines von der Bedienungsperson interpretierbaren alphanumerischen Wortes ist, kann der Benutzer daraus einen Hinweis auf abrufbare abgespeicherte Parameter über den zuletzt abgelaufenen Arbeitsprozess entnehmen.

Dieses Wort soll gemäß einer vorteilhaften Weiterbildung der Erfindung als Hinweis auf ein abrufbares Protokoll über das zuletzt abgelaufene Arbeitsprogramm von der Bedienungsperson zu verstehen sein. Es kann beispielsweise unmittelbar das Wort "Protokoll" sein.

Wenn dem Anzeigeelement eine Betätigungseinrichtung zugeordnet ist, durch deren Betätigung eine Folge von Informationsausgaben über Mess- und Betriebswerte auslösbar ist, kann er sich die Informationen aus dem Protokoll direkt auf das Anzeigedisplay holen und ablesen. Dazu kann die beispielsweise akustische Information durch eine ebenfalls akustische Abfrage ausgelöst werden. In den bisher üblichen Usancen entsprechender Weise kann aber die Betätigungseinrichtung auch eine von Hand betätigbare Taste sein, die räumlich neben dem optischen Anzeigeelement eines mehrzeiligen Anzeigedisplays angeordnet ist. Beispielsweise kann dann bei jeder Betätigung der Betätigungseinrichtung die Folge von Informationsausgaben Stück für Stück fortschaltbar sein.

Auf diese Weise können die vom Benutzer gewünschten Informationen unmittelbar vom Display abgelesen und mit seinen vorgewählten Einstellungen verglichen werden.

Die ausgebbaren Informationen können die eingestellten Programmparameter des zuletzt abgelaufenen Arbeitsprozesses betreffen. Sie können aber auch - anstelle der Programmparameter oder zusätzlich zu ihnen - die Mess- und Betriebswerte des zuletzt abgelaufenen Arbeitsprozesses betreffen. Als solche Messwerte kommen in Betracht die automatisch ermittelte Beladungsmenge mit zu behandelnder Wäsche, die beanspruchte Energiemenge, die beanspruchte Wassermenge, eine Intensität von Behandlungsabschnitten, nämlich das Hauptwaschen bzw. -spülen oder das Klarspülen oder das Schleudern.

Die abzufragenden Betriebswerte können in einer Wasch- oder Geschirrspülmaschine maschine eine Schaumerkennung betreffen oder in einer Waschmaschine den Verlauf eines Schleuderprogrammabschnitts. Hier wird insbesondere interessant sein, ob und wie oft wegen einer als zu groß klassifizierten Unwucht der Schleuderanlauf abgebrochen wurde und/oder ob deswegen möglicherweise die Schleuderdrehzahl reduziert worden ist. Weitere hier nicht näher benannte Programmabschnitte in Waschmaschinen oder anderen programmgesteuerten Haushaltgeräten können ebenfalls Objekt von retrospektiven Betrachtungen sein.

Anhand eines in der Zeichnung dargestellten Ausführungsbeispiels ist die Erfindung nachstehend erläutert. Es zeigen
- Fig. 1: die Frontansicht eines Bedienungsfeldes für eine Waschmaschine mit einem erfindungsgemäß ausgestatteten Anzeigedisplay,
- Fig. 2: ein Anzeigedisplay gemäß Fig. 1 in vergrößerter Darstellung mit einer Anzeige der vorgewählten Programmparameter,
- Fig. 3: ein Anzeigedisplay gemäß Fig. 2 mit Anzeige eines Messwertes für die Programmdauer und
- Fig. 4: ein Anzeigedisplay gemäß Fig. 2 mit Anzeige eines Betriebswertes für die Schaumbildung in der Spülphase des abgelaufenen Arbeitsprogramms.

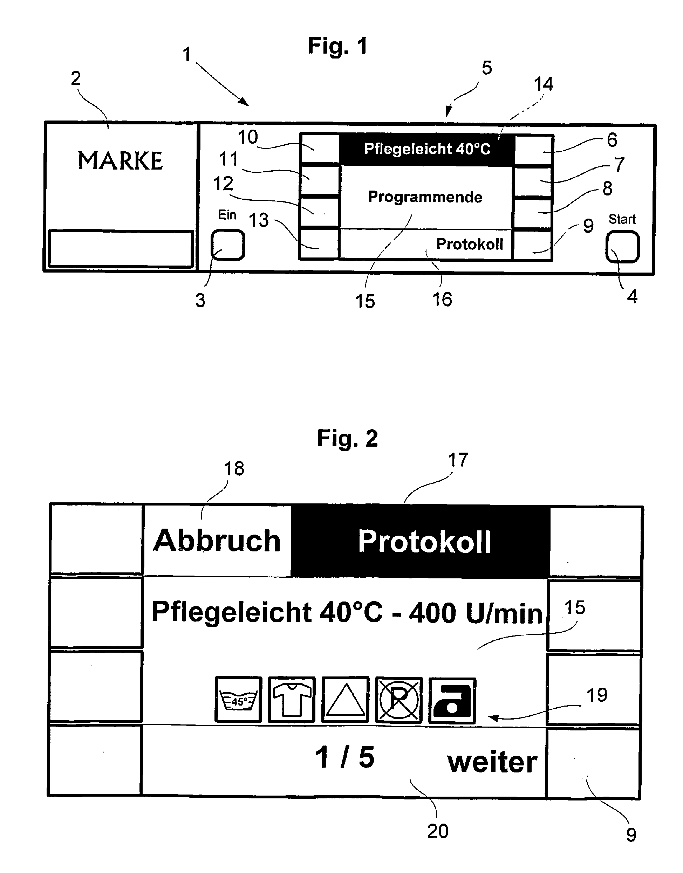

An einer Seite des Bedienungsfeldes 1 einer Waschmaschine ist gewöhnlicherweise die Griffplatte 2 einer Waschmittelschublade angeordnet, die für die Erfindung keine Bedeutung hat. Das Bedienungsfeld 1 hat zwei Tasten 3 und 4 für die elektrische Verbindung der Waschmaschine mit dem Stromnetz "Ein" und für die Inbetriebsetzung des gewählten Arbeitsprozesses "Start". Das Anzeigedisplay 5 wird rechts und links von je einer Spalte von Tasten 6 bis 9 und 10 bis 13 flankiert. Der vom Anzeigedisplay 5 in Fig. 1 dargestellte Zustand betrifft das Programmende eines abgelaufenen Arbeitsprozesses "Pflegeleicht 40°C" (Anzeige im Feld 14). Im Feld 15 wird durch Abbildung des Wortes "Programmende" das Ende des abgelaufenen Arbeitsprozesses signalisiert. Das Feld 16 bildet das Wort "Protokoll" unmittelbar neben der Taste 9 ab und zeigt damit an, dass durch Drücken der Taste 9 ein Protokoll über den zuletzt abgelaufenen Arbeitsprozess abgerufen werden kann. Dann erscheint ein Bild im Anzeigedisplay 5, wie es in Fig. 2 wiedergegeben ist.

Das frühere Feld 14 hat sich dabei aufgeteilt in die Felder 17 und 18. Feld 17 zeigt nun den Zustand "Protokoll", Feld 18 die Option "Abbruch". Im ersten von fünf möglichen Bildern zeigt das Feld 15 nunmehr die eingestellten Daten des gewählten Programmms. Dabei werden berücksichtigte Wäschefaktoren durch die Piktogramme 19 dargestellt, die für das gewählte Programm im vorliegenden Beispiel nicht unbedingt zutreffend sein müssen, sondern nur als Beispiel gelten sollen. Das Feld 20 zeigt einerseits an (1 / 5), dass die gezeigte Darstellung die erste von fünf möglichen ist.

Andererseits zeigt das rechts abgebildete Wort "weiter" neben der Taste 9 an, dass beim Betätigen der Taste 9 die nächste (zweite) der fünf möglichen Darstellungen angezeigt wird.

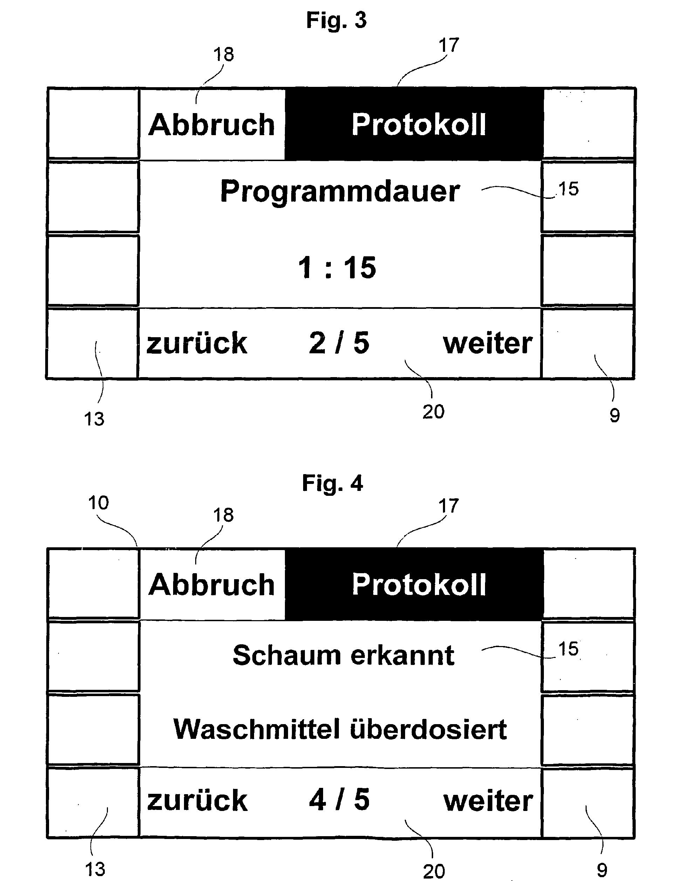

Diese zweite Darstellung ist in Fig. 3 abgebildet. Während sich die Anzeigen der Felder 17 und 18 nicht verändert haben, zeigt das Feld 15 nun die Programmdauer an. Dazu werden die Worte "Programmdauer" und beispielsweise "1:15" abgebildet, was besagt, dass der abgelaufene Arbeitsprozess tatsächlich 1 Stunde und 15 Minuten gedauert hat. Vielleicht hatte die prognostizierte Programmdauer beim Anzeigen des gewählten Programmes vor dem Beginnen des Arbeitsprozesses nur 1 Stunde und 5 Minuten betragen. Nach der Anzeige "1:15" weiß der Benutzer nun, dass der Arbeitsprozess tatsächlich 10 Minuten länger gedauert hat. Zusätzlich zur Anzeige "2 / 5" für die zweite von fünf möglichen Darstellungen von protokollierten Parametern im Feld 20 zeigt nun auch das Wort "zurück" an, das beim Betätigen der daneben liegenden Taste 13 die davor stehende Anzeige (1/5 wie in Fig. 2) wieder auf das Display geholt werden kann.

In Fig. 4 ist eine Darstellung "4 / 5" nach dem Überblättern der Darstellung "3 / 5" wiedergegeben, bei der das Feld 15 einen Betriebswert abbildet, nämlich "Schaum erkannt", was aussagt, dass am Ende der Spülphase innerhalb des Arbeitsprozesses noch Schaumbildung in der Spüllauge sensiert wurde. Außerdem hat das Programmsystem daraus die Aussage generiert, dass "Waschmittel überdosiert" war und zeigt dies ebenfalls im Feld 15 an.

Sobald die links neben dem Feld 18 "Abbruch" liegende Taste 10 gedrückt wird, erlischt die Anzeige des Protokolls. Dann kann entweder das Display völlig ausgeschaltet sein oder wieder dieselbe Anzeige haben wie unmittelbar nach Programmende (wie in Fig. 1).

Abweichend vom dargestellten Ausführungsbeispiel können, ohne die Erfindung zu verlassen, natürlich noch weitere Parameter als Mess- oder Betriebswerte zur Anzeige gebracht werden. Dazu können mehr oder weniger als fünf Seiten (oder Anzeigeebenen) auf das Display schaltbar sein. Entsprechend würde sich dann die Anzeige "a / x" ändern.

Gemäß der weiter oben bereits angesprochenen akustischen Anzeige einer Protokollausgabe-Funktion kann auch jeder der protokollierten Messwerte oder Betriebswerte akustisch ausgegeben werden.

Die erfindungsgemäßen Maßnahmen an einem Haushaltgerät erhöhen den Kundennutzen und führen den Kunden durch einen Lernprozess im Hinblick auf Einsparung von Energie und Ressourcen. Außerdem wird dem Kunden dadurch die verwendete Sensorik eines Haushaltgerätes verständlicher gemacht.

## Patentansprüche

1. Programmgesteuertes Haushaltgerät mit einer Anzeigeeinrichtung für akustische oder optische Zeichen und mit einem Speicherbereich der Programmsteuerungseinrichtung, der zum Speichern von eingestellten Programmparametern und zum Abspeichern von Mess- und Betriebswerten der am ablaufenden Arbeitsprozess beteiligten Aktoren und Sensoren eingerichtet ist, **dadurch gekennzeichnet, dass** die Anzeigeeinrichtung ein Anzeigeelement enthält, das nach Ablauf des Arbeitsprozesses eingeschaltet ist und einen Hinweis enthält auf die Möglichkeit der Informationsabgabe über vor und/oder während des zuletzt abgelaufenen Arbeitsprozesses gespeicherte Mess- und Betriebswerte.

2. Haushaltgerät nach Anspruch 1, **dadurch gekennzeichnet, dass** die Anzeigeeinrichtung ein wenigstens einzeiliges Anzeigedisplay enthält und der Hinweis eine Abbildung eines von der Bedienungsperson interpretierbaren alphanumerischen Wortes ist.

3. Haushaltgerät nach Anspruch 2, **dadurch gekennzeichnet, dass** das Wort als Hinweis auf ein abrufbares Protokoll über das zuletzt abgelaufene Arbeitsprogramm von der Bedienungsperson zu verstehen ist.

4. Haushaltgerät nach einem der Ansprüche 1 bis 3, **dadurch gekennzeichnet, dass** dem Anzeigeelement eine Betätigungseinrichtung zugeordnet ist, durch deren Betätigung eine Folge von Informationsausgaben über Mess- und Betriebswerte auslösbar ist.

5. Haushaltgerät nach Anspruch 4, **dadurch gekennzeichnet, dass** die Betätigungseinrichtung eine von Hand betätigbare Taste ist, die räumlich neben dem optischen Anzeigeelement eines mehrzeiligen Anzeigedisplays angeordnet ist.

6. Haushaltgerät nach Anspruch 4 oder 5, **dadurch gekennzeichnet, dass** bei jeder Betätigung der Betätigungseinrichtung die Folge von Informationsausgaben Stück für Stück fortschaltbar ist.

7. Haushaltgerät nach einem der vorstehenden Ansprüche, **dadurch gekennzeichnet, dass** die ausgebbaren Informationen die eingestellten Programmparameter des zuletzt abgelaufenen Arbeitsprozesses betreffen.

8. Haushaltgerät nach einem der Ansprüche 1 bis 6, **dadurch gekennzeichnet, dass** die ausgebbaren Informationen die Mess- und Betriebswerte des zuletzt abgelaufenen Arbeitsprozesses betreffen.

9. Haushaltgerät nach Anspruch 8, **dadurch gekennzeichnet, dass** die Messwerte die gemessene Programmdauer betreffen.

10. Haushaltgerät nach Anspruch 8 oder 9 in Form einer Waschmaschine, **dadurch gekennzeichnet, dass** die Messwerte die automatisch ermittelte Beladungsmenge mit zu behandelnder Wäsche betreffen.

11. Haushaltgerät nach einem der Ansprüche 8 bis 10, **dadurch gekennzeichnet, dass** die Messwerte die beanspruchte Energiemenge betreffen.

12. Haushaltgerät nach einem der Ansprüche 8 bis 11 in Form einer Wasch- oder Geschirrspülmaschine, **dadurch gekennzeichnet, dass** die Messwerte die beanspruchte Wassermenge betreffen.

13. Haushaltgerät nach einem der Ansprüche 8 bis 12, **dadurch gekennzeichnet, dass** die Messwerte eine Intensität von Behandlungsabschnitten betreffen.

14. Haushaltgerät nach Anspruch 13 in Form einer Wasch- oder Geschirrspülmaschine, **dadurch gekennzeichnet, dass** der Behandlungsabschnitt das Hauptwaschen bzw. -spülen ist.

15. Haushaltgerät nach Anspruch 13 in Form einer Wasch- oder Geschirrspülmaschine, **dadurch** gekenzzeichnet, dass der Behandlungsabschnitt das Klarspülen ist.

16. Haushaltgerät nach einem der Ansprüche 13 bis 15 in Form einer Waschmaschine, **dadurch gekennzeichnet, dass** der Behandlungsabschnitt das Schleudern ist.

17. Haushaltgerät nach Anspruch 8 in Form einer Wasch- oder Geschirrspülmaschine, **dadurch gekennzeichnet, dass** die Betriebswerte eine Schaumerkennung betreffen.

18. Haushaltgerät nach Anspruch 8 in Form einer Waschmaschine, **dadurch gekennzeichnet, dass** die Betriebswerte den Verlauf eines Schleuderprogrammabschnitts betreffen.

## Claims

1. Program-controlled domestic appliance with an indicating device for acoustic or optical signalling and with a memory region of the program control device, which is equipped for storage of set program parameters and for filing of measurement and operating values of the actuators and sensors participating in the elapsing operating process, **characterised in that** the indicating device contains an indicating element which is switched on after expiry of the operating process and contains a reference to the possibility of information output about measurement and operating values stored before and/or during the last elapsed operating process.

2. Domestic appliance according to claim 1, **characterised in that** the indicating device contains at least one single-line indicating display and the reference is a depiction of an alphanumeric word able to be interpreted by the operator.

3. Domestic appliance according to claim 2, **characterised in that** the word is to be understood by the operator as a reference to an interrogatable log about the last elapsed operating program.

4. Domestic appliance according to one of claims 1 to 3, **characterised in that** an actuating device, through the actuation of which a sequence of information outputs about measurement and operating values can be triggered, is associated with the indicating element.

5. Domestic appliance according to claim 4, **characterised in that** the actuating device is a manually actuable button which is arranged physically adjacent to the optical indicating element of a multi-line indicating display.

6. Domestic appliance according to claim 4 or 5, **characterised in that** the sequence of information outputs can be advanced item by item with each actuation of the actuating device.

7. Domestic appliance according to one of the preceding claims, **characterised in that** the data able to be output relates to the set program parameters of the last elapsed operating process.

8. Domestic appliance according to one of claims 1 to 6, **characterised in that** the data able to be output relates to the measurement and operating values of the last elapsed operating process.

9. Domestic appliance according to claim 8, **characterised in that** the measurement values relate to the measured program duration.

10. Domestic appliance according to claim 8 or 9 in the form of a washing machine, **characterised in that** the measurement values relate to the automatically detected load quantity with laundry to be treated.

11. Domestic appliances according to one of claims 8 to 10, **characterised in that** the measurement values relate to the amount of consumed energy.

12. Domestic appliance according to one of claims 8 to 11 in the form of a washing or dishwashing machine, **characterised in that** the measurement values relate to the amount of consumed water.

13. Domestic appliance according to one of claims 8 to 12, **characterised in that** the measurement values relate to an intensity of treatment sections.

14. Domestic appliance according to claim 13 in the form of a washing or dishwashing machine, **characterised in that** the treatment section is the main washing or rinsing.

15. Domestic appliance according to claim 13 in the form of a washing or dishwashing machine, **characterised in that** the treatment section is the clear rinsing.

16. Domestic appliance according to one of claims 13 to 15 in the form of a washing machine, **characterised in that** the treatment section is the spinning.

17. Domestic appliance according to claim 8 in the form of a washing or dishwashing machine, **characterised in that** the operating values relate to a foam recognition.

18. Domestic appliance according to claim 8 in the form of a washing machine, **characterised in that** the operating values relate to the course of a spinning program section.

## Revendications

1. Appareil électroménager commandé par programme, doté d'un dispositif d'affichage pour des symboles acoustiques ou optiques et d'une zone de mémoire du dispositif de commande de programme, qui est configurée pour mémoriser des paramètres de programme réglés et pour mémoriser des valeurs de mesure et de fonctionnement d'acteurs et de capteurs participant au processus de travail en cours, **caractérisé en ce que** le dispositif d'affichage comprend un élément d'affichage qui est mis en marche après l'exécution du processus de travail et comprend une indication relative à la possibilité de sortie d'informations concernant les valeurs de mesure et de fonctionnement mémorisées avant et/ou pendant le processus de travail exécuté en dernier.

2. Appareil électroménager selon la revendication 1, **caractérisé en ce que** le dispositif d'affichage comprend un écran d'affichage au moins d'une ligne et **en ce que** l'indication est une représentation d'un mot alphanumérique pouvant être interprété par la personne de service.

3. Appareil électroménager selon la revendication 2, **caractérisé en ce que** le mot est à comprendre par la personne de service en tant qu'indication relative à un protocole pouvant être appelé, concernant le programme de travail exécuté en dernier.

4. Appareil électroménager selon l'une quelconque des revendications 1 à 3, **caractérisé en ce qu'**un dispositif de commande est associé à l'élément d'affichage, au moyen de la commande duquel une suite de sorties d'informations sur des valeurs de mesure et de fonctionnement peut être déclenchée.

5. Appareil électroménager selon la revendication 4, **caractérisé en ce que** le dispositif de commande est une touche commandable à la main, qui est disposée dans l'espace à côté de l'élément d'affichage optique d'un écran d'affichage à plusieurs lignes.

6. Appareil électroménager selon la revendication 4 ou 5, **caractérisé en ce qu'**à chaque commande du dispositif de commande, la suite de sorties d'informations peut être poursuivie pièce par pièce.

7. Appareil électroménager selon l'une quelconque des revendications précédentes, **caractérisé en ce que** les informations pouvant être sorties concernent les paramètres de programme réglés du processus de travail exécuté en dernier.

8. Appareil électroménager selon l'une quelconque des revendications 1 à 6, **caractérisé en ce que** les informations pouvant être sorties concernent les valeurs de mesure et de fonctionnement du processus de travail exécuté en dernier.

9. Appareil électroménager selon la revendication 8, **caractérisé en ce que** les valeurs de mesure concernent la durée mesurée du programme.

10. Appareil électroménager selon la revendication 8 ou 9, sous forme d'un lave-linge, **caractérisé en ce que** les valeurs de mesure concernent la quantité de chargement, détectée automatiquement, du linge à traiter.

11. Appareil électroménager selon l'une quelconque des revendications 8 à 10, **caractérisé en ce que** les valeurs de mesure concernent la quantité d'énergie sollicitée.

12. Appareil électroménager selon l'une quelconques des revendications 8 à 11, sous forme d'un lave-linge ou d'un lave-vaisselle, **caractérisé en ce que** les valeurs de mesure concernent la quantité d'eau sollicitée.

13. Appareil électroménager selon l'une quelconque des revendications 8 à 12, **caractérisé en ce que** les valeurs de mesure concernent une intensité de phases de traitement.

14. Appareil électroménager selon la revendication 13, sous forme d'un lave-linge ou d'un lave-vaisselle, **caractérisé en ce que** la phase de traitement est le lavage principal resp. le rinçage principal.

15. Appareil électroménager selon la revendication 13, sous forme d'un lave-linge ou d'un lave-vaisselle, **caractérisé en ce que** la phase de traitement est le rinçage.

16. Appareil électroménager selon l'une quelconque des revendications 13 à 15, sous forme d'un lave-linge ou d'un lave-vaisselle, **caractérisé en ce que** la phase de traitement est l'essorage.

17. Appareil électroménager selon la revendication 8, sous forme d'un lave-linge ou d'un lave-vaisselle, **caractérisé en ce que** les valeurs de fonctionnement concernent une détection de mousse.

18. Appareil électroménager selon la revendication 8, sous forme d'un lave-linge, **caractérisé en ce que** les valeurs de fonctionnement concernent le déroulement d'une phase de programme d'essorage.
